# EUROPÄISCHE PATENTANMELDUNG

(11) **EP 0 753 976 A2**
(43) Veröffentlichungstag der Anmeldung: **15.01.1997**
(21) Anmeldenummer: 96110866.9
(22) Anmeldetag: 05.07.1996
(51) Int. Cl.: H04Q 7/24, H04Q 7/38

(54) **Virtuelles Privates Netz für Mobilfunkteilnehmer**

(30) Priorität: 12.07.1995 DE 19525363
(71) Anmelder: Alcatel SEL Aktiengesellschaft, D-70435 Stuttgart (DE); ALCATEL N.V., NL-2288 BH Rijswijk (NL)
(72) Erfinder: Pfundstein, Matthias, 70195 Stuttgart (DE)
(74) Vertreter: Knecht, Ulrich Karl, Dipl.-Ing.

(57) **Zusammenfassung**

Um ein virtuelles privates Netz (VN) innerhalb eines gegebenen Mobilfunknetzes (MRN) einzurichten wird eine mit den Funkfeststationen (BS) verbundene Einrichtung vorgeschlagen, die einen Auf- und Abbau von Rufverbindungen zwischen Mobilfunkteilnehmern (MS1...MSX) steuert, die dem Versorgungsbereich der Funkfeststationen zugeordnet sind, und eine mit der Einrichtung verbundene Datenbank (HLR), die für jeden dieser Mobilfunkteilnehmer einen Teilnehmerdatensatz DS enthält mit einem ersten logischen Datensatz (LDS), um sie als Teilnehmer des Mobilfunknetzes zu registrieren. Für einige dieser Mobilfunkteilnehmer (MS1, MS2, MS3) ist jeweils ein zweiter logischer Datensatz (LDS-VN) angelegt, um sie als Teilnehmer eines virtuellen privaten Netzes zu registrieren. Somit wird erfindungsgemäß in der bereits vorhandenen Datenbank (HLR) dem Teilnehmerdatensatz neben einem Datensatz (LDS) zum Zugriff auf das Mobilfunknetz (MRN) als solcher ein weiterer Datensatz (LDS-VN) hinzugefügt, der einen Mobilfunkteilnehmer den Zugriff auf ein virtuelles privates Netz (VPN) ermöglicht. Es sind im wesentlichen nur Maßnahmen im Bereich der Mobilfunknetz-Software zu treffen, wodurch die Einrichtung eines oder auch mehrerer virtueller privater Netze sehr einfach durchzuführen ist. Der Aufbau eines dem Mobilfunknetz überlagerten Intelligenten Netzes entfällt.

## Beschreibung

Die Erfindung betrifft ein Mobilfunknetz, eine Einrichtung, sowie eine Vorrichtung nach dein Oberbegriff eines der nebengeordneten Ansprüchen.

Aus dem Artikel "Revenue opportunities for GSM network opperators" von G. Buckman, auf Seiten 39 bis 42 der Zeitschrift "Mobile Communications International", Ausgabe 23, Juni 1995, (zu beziehen über MCI Sales, 3-6 Kenrick Place, London W1H 3FF, Großbritannien), ist ein Mobilfunknetz bekannt, in dem virtuelle private Netze für Mobilfunkteilnehmer eingerichtet sind. Das dort beschriebene Mobilfunknetz ist nach dem GSM-Standard (Global System for Mobile Communications) aufgebaut und enthält mindestens eine Funkfeststation zur Versorgung einer Funkzelle und eine Einrichtung zum Auf- und Abbau von Rufverbindungen zwischen zwei Mobilfunkteilnehmern oder zwischen einem Mobilfunkteilnehmer und einem Festnetzteilnehmer (s. dortige Fig. auf Seite 40). In dem dort beschriebenen Mobilfunknetz sollen sogenannte virtuelle private Netze eingerichtet werden durch Bildung von Gruppen, in denen verschiedene Mobilfunkteilnehmer logisch einander zugeordnet sind. Jedes private Netz, das eine solche Gruppe umfaßt, wird in dem obigen Artikel auch als virtuelle Nebenstellenanlage bezeichnet, die über einen eigenen Rufnummernplan verfügt. Die Mobilfunkteilnehmer können über eine vierstellige Wählnummer auf die Nebenstellenanlage zugreifen und kostengünstige Gespräche innerhalb ihrer Gruppe, das heißt innerhalb ihres virtuellen privaten Netzes, führen. In dem obigen Artikel ist nicht beschrieben, wie ein solches virtuelles privates Netz für Mobilfunkteilnehmer innerhalb des Mobilfunknetzes eingerichtet werden kann.

In US 5,345,502 ist die Einrichtung von virtuellen privaten Netzen innerhalb eines Mobilfunknetzes beschrieben. Dort wird ein virtuelles privates Netz mit Hilfe eines Intelligenten Netzes aufgebaut (s. dortige Fig.). Das Intelligente Netz enthält sogenannte Service Control Points INSCP1 und INSCP2, die mit den Vermittlungsstellen PISDN1 bzw. PISDN2 verbunden sind, das heißt, Elemente die zusätzlich zum vorhandenen Mobilfunknetz eingerichtet werden müssen und somit den Einsatz zusätzlicher Hard- und Software erfordern.

Aufgabe der Erfindung ist es nun, ein Mobilfunknetz der eingangs genannten Art durch Ausnutzung bereits vorhandener Einrichtungen und Vorrichtungen des Mobilfunknetzes mit mindestens einem virtuellen privaten Netze für Mobilfunkteilnehmer auszustatten.

Gelöst wird die Aufgabe durch ein Mobilfunknetz, eine Einrichtung sowie eine Datenbank nach einem der nebengeordneten Ansprüche. Demnach enthält das Mobilfunknetz eine mit den Funkfeststationen verbundene Einrichtung, die einen Auf- und Abbau von Rufverbindungen zwischen Mobilfunkteilnehmern steuert, die dem Versorgungsbereich der Funkfeststationen zugeordnet sind, und eine mit der Einrichtung verbundene Datenbank, die für jeden dieser Mobilfunktteilnehmer einen Teilnehmerdatensatz enthält, dem ein erster logischer Datensatz zugeordnet ist, um sie als Teilnehmer des Mobilfunknetzes zu registrieren, und dem für einige dieser Mobilfunkteilnehmer jeweils ein zweiter logischer Datensatz zugeordnet ist, um sie als Teilnehmer eines virtuellen privaten Netzes zu registrieren. Somit wird erfindungsgemäß in der bereits vorhandenen Datenbank dem Teilnehmerdatensatz, der zum Zugriff auf das Mobilfunknetz als solches einen ersten Datensatz enthält, ein weiterer Datensatz hinzugefügt, der einen Mobilfunkteilnehmer den Zugriff auf ein virtuelles privates Netz ermöglicht. Es sind im wesentlichen nur Maßnahmen im Bereich der Mobilfunknetz-Software zu treffen, wodurch die Einrichtung eines oder auch mehrerer virtueller privater Netze sehr einfach durchzuführen ist.

Vorteilhafte Ausgestaltungen der Erfindung sind den Unteransprüchen zu entnehmen.

Die Erfindung wird nun anhand eines Ausführungsbeispiels und unter Zuhilfenahme folgender Fig. beschrieben:
- Fig. 1: die schematisch den Aufbau eines erfindungsgemäßen Mobilfunknetzes zeigt; und
- Fig. 2: die den strukturellen Aufbau der in der Datenbank gespeicherten Teilnehmerdatensätze zeigt

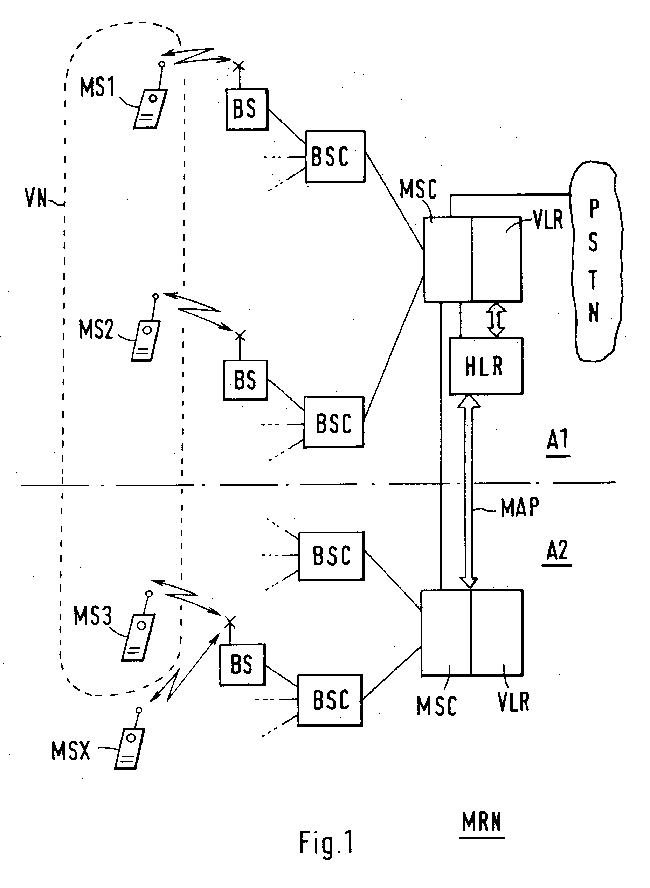

Fig. 1 zeigt schematisch den Aufbau eines Mobilfunknetzes MRN, innerhalb dessen ein privates virtuelles Netz VN für eine Gruppe von Mobilfunkteilnehmern MS1, MS2 und MS3 eingerichtet ist.

Das Mobilfunknetz MRN enthält Funkfeststationen BS, die jeweils eine Funkzelle des Mobilfunknetzes versorgen. Mehrere benachbarte Funkzellen bilden einen Funkfeldbereich. Dazu sind die entsprechenden Funkfeststationen mit einer Funkfeststationssteuerung BSC verbunden. Mehrere Funkfeldbereiche bilden einen Funkvermittlungsbereich. Dazu sind die entsprechenden Funkfeststationssteuerungen BSC mit einer Funkvermittlungsstelle MSC verbunden. Mehrere Funkfeldbereiche bilden das Mobilfunknetz MRN.

In Fig. 1 sind vereinfachend nur zwei Funkvermittlungsbereiche A1 und A2 mit jeweils einer Funkvermittlungsstelle MSC dargestellt, von denen eine mit dem öffentlichen Telekommunikationsnetz PSTN verbunden ist. Die Funkvermittlungsstelle MSC ist mit einer Datenbank, im weiteren Heimatdatei HLR genannt, verbunden. Diese Heimatdatei HLR verwaltet die Teilnehmerdaten der in den Funkvermittlungsbereichen fest registrierten Mobilfunkteilnehmer MS1, MS2, MS3 und MSX.

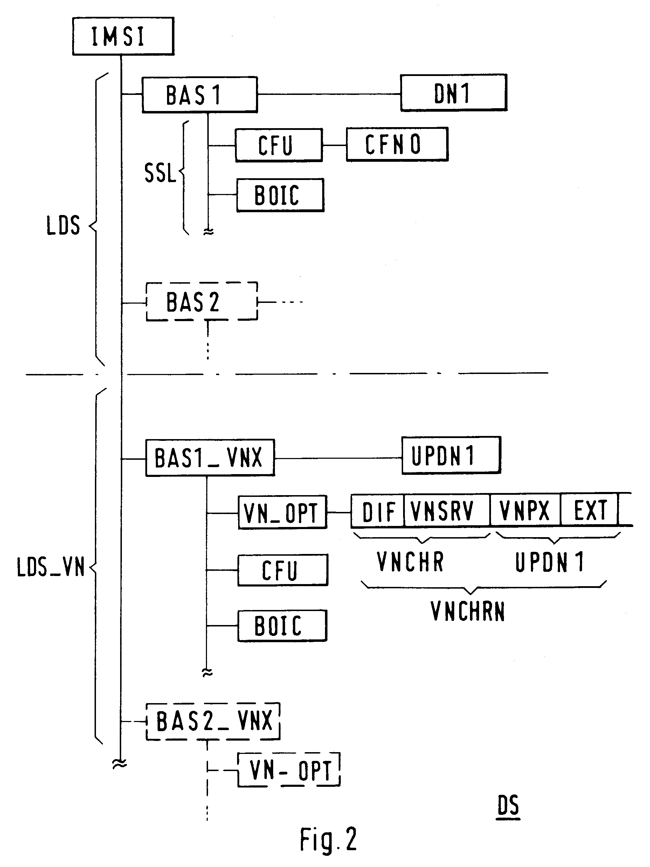

Das in Fig. 1 gezeigte Mobilfunknetz MRN ist entsprechend dem paneuropäischen Mobilfunkstandard GSM aufgebaut. Zum Einrichten eines privaten virtuellen Netzes für die in Fig. 1 dargestellten Mobilfunkteilnehmer MS1, MS2 und MS3 wird erfindungsgemäß auf die gegebene Hardware, insbesondere auf die Heimatdatei HLR, sowie auf die vorhandene Netzwerk-Software, insbesondere auf die GSM-Protokolle MAP aus dem sogenannten Mobile Application Part, (s. GSM Specifikation 09.02) zurückgegriffen. Dadurch wird das private virtuelle Netz eingerichtet, ohne mittels weiterer Hardware eine IN-Struktur (IN: Intelligent Network) aufbauen zu müssen. Es wird erfindungsgemäß mit der bereits vorhandenen Struktur diese IN-Struktur einfach und preiswert nachgebildet, was im folgenden auch anhand Fig. 2 näher beschrieben wird:

Fig. 2 zeigt schematisch die logische Datenstruktur aller Teilnehmerdaten, die einem Mobilfunkteilnehmer des privaten virtuellen Netzes, hier z.B. dem Mobilfunkteilnehmer MS3, zugeordnet sind. Die Teilnehmerdaten werden von der Heimatdatei HLR verwaltet und werden etwa zum Aufbau von Rufverbindungen herangezogen.

Wie in Fig. 2 dargestellt enthalten die Teilnehmerdaten eine Mobilfunkteilnehmer - Identitätsnummer IMSI, die hier dem Mobilfunkteilnehmer MS3 zugeordnet ist. Diese Mobilfunkteilnehmer - Identitätsnummer im weiteren kurz ID-Nummer genannt, ist sowohl auf der Berechtigungskarte (sog. Smart Card) als auch in der Heimatdatei HLR gespeichert. Der ID-Nummer sind erfindungsgemäß ein Teilnehmerdatensatz DS mit einem ersten logischen Datensatz LDS und mit einem zweiten logischen Datensatz LDS-VN zugeordnet. Jeder dieser logischen Datensätze gibt das Diensteprofil für mindestens einen Grunddienst BAS1 BAS2, BAS1-VNX oder BAS2-VNX an. Zu diesen Grunddiensten zählen etwa der Telefon- oder Telefaxdienst. Der Telefondienst für das Mobilfunknetz MRN hat hier die Bezeichnung BAS1, derjenige für das virtuelle private Netz VN hat die Bezeichnung BAS1-VNX, wobei das "X" in der Bezeichnung andeuten soll, daß mit der in Fig. 2 dargestellten Struktur mehrere virtuelle Netze VNX eingerichtet werden können. Für die Telefaxdienste innerhalb der verschiedenen Netze, wurden die Bezeichnungen BAS2 und BAS2-VNX gewählt. Alle logischen Datensätze haben dieselbe Struktur und sind dem GSM-Protokoll MAP angepaßt.

Innerhalb des Teilnehmerdatensatzes DS wird immer dann auf den ersten logischen Datensatz LDS zugegriffen, wenn sich der Mobilfunkteilnehmer MS3 als Teilnehmer des ganzen Mobilfunknetzes, das heißt als herkömmlicher Mobilfunkteilnehmer einbucht. Eine in jedem logischen Datensatz enthaltende Diensteliste SSL, eine sogenannte Supplementary Services List, gibt alle diejenigen Dienste an, auf die der Mobilfunkteilnehmer MS3 zusätzlich zum Grunddienst (hier z.B. Telefondienst BAS1) Zugriff hat. Solche Dienste sind etwa Rufumleitung CFU mit Verweis auf einen anderen Teilnehmeranschluß, die der Mobilfunkteilnehmer anhand einer Teilnehmeranschluß-Nummer CFNO vorgibt, oder eine Rufsperre BOIC für alle abgehenden internationalen Rufe. Jeder Dienst ist über seinen Dienstecode, hier CFU oder BOIC, gekennzeichnet.

Der zweite logische Datensatz LDS-VN enthält ebenfalls eine Diensteliste, die jedoch einen Dienstecode VN-OPT umfaßt, der angibt, ob der Mobilfunkteilnehmer MS3 innerhalb des privaten virtuellen Netzes eingebucht wird oder nicht. Dieser Dienstecode VN-OPT ist vergleichbar dem Dienstecode CFU strukturiert und verweist ebenfalls auf einen Teilnehmeranschluß. Dieser Teilnehmeranschluß ist jedoch durch eine Teilnehmeranschluß-Nummer UPDN1 gekennzeichnet, die dem Mobilfunkteilnehmer MS3 selbst als Teilnehmer des privaten Netzes zugeordnet ist. Dieser Teilnehmeranschluß ist physikalisch identisch, mit dem Teilnehmeranschluß, der innerhalb des Mobilfunknetzes die Nummer DN1 trägt. Somit enden beide Teilnehmeranschlüße UPDN1 und DN1 an ein und demselben Mobilfunkendgerät, sie unterscheiden sich lediglich durch ihre logische Zuordnung zum öffentlichen oder virtuellen privaten Netz.

Solche wie in Fig. 2 gezeigten logischen Datensätze werden für jeden Mobilfunkteilnehmer eingerichtet, der auch als Teilnehmer des privaten Netzes registriert sein möchte.

Da die Zuordnung eines jeden dieser Mobilfunkteilnehmer zum öffentlichen oder privaten Netz keine physikalische Änderung der gegebenen Netzstruktur bewirkt, ist das private Netz als ein virtuelles Netz anzusehen, das auf die physikalische Netzstruktur des Mobilfunknetzes aufgebaut ist.

Der Aufbau diese privaten Netzes erfordert wenig Aufwand, da hierzu nicht nur auf die bereits vorhandenen physikalischen, sondern auch auf die bereits vorhandenen logischen Netzstrukturen, wie etwa auf das oben genannte MAP-Protokoll und auf das Funkschnittstellen-Protokoll, zurückgegriffen wird. Vergleichbar zu der oben beschriebenen Einrichtung des zusätzlichen logischen Datensatzes LDS-VN für das private Netz, können auch mehrere zusätzliche Datensätze für verschiedene private Netze eingerichtet werden. Derjenige Datensatz, der den Eintrag "aktiv" im Dienstecode VN-OPT enthält, gibt an, welchem der privaten Netze der Mobilfunkteilnehmer zugeordnet ist. Enthält keiner dieser zusätzlichen Datensätze einen solchen Eintrag, so wird der Mobilfunkteilnehmer in das öffentliche Mobilfunknetz eingebucht.

Nachfolgend werden das Einbuchen des Mobilfunkteilnehmers und der Rufaufbau für einen abgehenden sowie für einen ankommenden Ruf (Mobile Originating Call bzw. Mobile Terminating Call) beschrieben:

Die in Fig. 1 gezeigte Darstellung des Mobilfunknetzes geht von einem virtuellen privaten Netz VN aus das zwei Funkvermittlungsbereichen A1 und A2 mit jeweils einer Funkvermittlungsstelle MSC, mit damit verbundenen Funkfeststationssteuerungen BSC sowie mit daran angeschlossenen Funkfeststationen BS umfaßt. Der dargestellte erste Funkvermittlungsbereich A1 ist ein sogenannter Low Cost Bereich, da dort die Gespräche von Teilnehmern MS1 und MS2 des privaten Netzes VN nur gering vergebührt werden. Der zweite Funkvermittlungsbereich A2 ist ein sogenannter High Cost Bereich, da dort höher vergebührt wird. Jeder Mobilfunkteilnehmer, der sich in einem dieser Bereiche aufhält, wird in einer temporären Datei, der sogenannten Besucherdatei VLR, entweder als Teilnehmer MSX des Mobilfunknetzes MRN als solches oder als Teilnehmer MS1 bis MS3 des privaten Netzes VN registriert. In dem Beispiel nach Fig. 2 hält sich der Mobilfunkteilnehmer MS3 in dem Besucherbereich A2 auf. Nimmt dieser Mobilfunkteilnehmer MS3 sein Mobilfunkendgerät in Betrieb, so wird über das bereits genannte MAP-Protokoll, die auf der Berechtigungskarte gespeicherte ID-Nummer IMSI, die sogenannte individuelle Teilnehmernummer (International Mobile Subscriber Identity), über die Funkvermittlungstelle seines Bereichs A2 an die Funkvermittlungsstelle und die Heimatdatei HLR im anderen Bereich A1 übertragen.

Diese ID-Nummer IMSI ist der Schlüssel zum Teilnehmerdatensatz DS. Die Heimatdatei HLR stellt nun fest, ob dem Mobilfunkteilnehmer MS3 neben dem einen logischen Datensatz LDS auch mindestens ein solcher logischer Datensatz LDS-VN zugeordnet ist, der in als Teilnehmer eines privaten Netzes kennzeichnet. Wie bereits oben beschrieben entspricht jedes private Netz einer virtuellen Nebenstellenanlage, der ein eigener Rufnummernplan zugeordnet ist.

Ist in der Heimatdatei mindestens ein zweiter logischer Datensatz LDS-VN eingetragen, wird an den Mobilfunkteilnehmer MS3 eine Kurznachricht gesendet zur Abfrage, ob er als Teilnehmer eines der privaten Netze oder als Teilnehmer des öffentlichen Mobilfunknetzes eingebucht werden möchte.

Durch Eingabe eines Einbuchkommandos für den Dienst VN-OPT und durch Eingabe der Nebenstellen-Nummer VNPX erhält die Heimatdatei HLR die wesentlichen Daten zur Prüfung der Zugangsberechtigung. Durch Vergleich der Nebenstellen-Nummer VNPX mit denjenigen, die in der Heimatdaei HLR unter der ID-Nummer IMSI des Mobilfunkteilnehmers gespeichert sind, wird geprüft, zu welchen virtuellen privaten Netzen dieser Zugriff hat. Hier hat der Mobilfunkteilnehmer MS3 auf nur ein einzelnes, nämlich das private Netz VN, Zugriff.

Die Heimatdatei HLR aktiviert durch Eintrag eines Flag-Bit innerhalb des VN-OPT-Datums den logischen Datensatz LDS-VN und überträgt diesen Datensatz als aktiven Teilnehmerdatensatz DS an die Besucherdateien VLR zur dortigen temponären Speicherung. Ist in der Heimatdatei HLR für den Mobilfunkteilnehmer MS3 keine solche Nebenstellen-Nummer VNPX gespeichert, so kann kein virtuelles Netz ausgewählt werden. Der Mobilfunkteilnehmer MS3 wird dann im Mobilfunknetz MRN eingebucht.

Hier wird der Mobilfunkteilnehmer MS3 als Teilnehmer in das virtuelle private Netz VN eingebucht. Der Teilnehmer MS3 kann nun innerhalb des privaten Netzes durch Wahl von Erweiterungsnummern die anderen Teilnehmern MS1 und MS2 seines Netzes schnell und einfach anrufen. Er selbst ist durch die Wahl seiner Erweiterungsnummer EXT, innerhalb des privaten Netzes VN erreichbar. Die Gebühren für Rufverbindungen innerhalb des Netzes, die nicht über den Bereich A1 hinausgehen, werden hier beispielsweise durch eine pauschale monatliche Grundgebühr beglichen. Für andere Rufverbindungen gelten hier Gebührentarife, die denen im öffentlichen Mobilfunknetzes vergleichbar sind.

Ein durch den Teilnehmer MS3 ausgelöster Ruf wird wie folgt aufgebaut:

Zunächst wird in der Besucherdatei VLR anhand des zu der Nummer VNCHRN gehörenden Datenfeldes DIF eine Nummernanalyse durchgeführt. Dieses Datenfeld DIF kann vom Teilnehmer MS3 eingegebene Einträge enthalten, wie etwa eine Netzauscheidungs-Kennziffer (z.B."0" oder "9") sowie ein Steuerzeichen (z.B."*") für eine Kommandoeingabe. Falls das Datenfeld DIF keine solchen Einträge enthält, greift die Besucherdatei VLR auf den Rufnummernplan für das virtuelle private Netz VN zu. Eine vom Teilnehmer MS3 eingegebene Nummer wird somit als Erweiterungsnummer oder Kurzwahlnummer erfaßt und über den Rufnummernplan in eine dem Mobilfunkprotokoll MAP angepaßte Teilnehmernummer UPDN* umgesetzt. Diese Teilnehmernummer enthält die Nebenstellennummer VNPX und die Erweiterungsnummer EXT* des gewünschten Teilnehmers MS*. Diese wird von der Besucherdatei VLR über das MAP-Protokoll an die Heimatdatei HLR gesendet, wo eine Referenz-Liste die ID-Nummer IMSI* des gewünschten Teilnehmers MS* angibt. Mittels Paging dieser ID-Nummer wird die Rufverbindung geschaltet.

Eine von Mobilfunknetz MRN oder dem öffentlichen Telefonnetz PSTN eingehender Ruf an den Mobilfunkteilnehmer MS3 würde herkömmlicherweise zu einer von der Heimatdatei HLR ausgeführten Auswertung eines solchen Teilnehmersatzes führen, dem nur ein logischer Datensatz zugeordnet ist. Somit würde entsprechend dem Beispiel nach Fig. 2 automatisch eine Aktivierung der im Datensatz LDS angegebenen Dienste erfolgen und eine Rufumleitung zu einem unter dem CFU-Datenfeld angegebenen Teilnehmeranschluß geschaltet.

Hier wird jedoch zunächst beim Eingang eines Rufwunsches in der Heimatdatei HLR geprüft, ob der gewünschte Mobilfunkteilnehmer MS3 als Teilnehmer des Mobilfunknetzes (Rufnumer DN1) oder als Teilnehmer des virtuellen privaten Netzes (Rufnummer UPDN1) gewünscht wird. Ist die Rufnummer UPDN1 gewählt worden, prüft die Heimatdatei HLR weiterhin, ob ein logischer Datensatz LDS-VN mit einer solchen Rufnummer existiert und aktiv ist, das heißt, ob der Dienstecode VN-OPT den Eintrag "aktiv" aufweist. Falls dies so ist, wird der Teilnehmer MS3 mittels seiner ID-Nummer IMSI und mittels Steuerung der Besucherdatei VLR gerufen (Paging). Da der Mobilfunkteilnehmer MS3 als Teilnehmer des virtuellen privaten Netzes VPN registriert ist, führen die eingehenden Rufe direkt zum Mobilfunkendgerät des Mobilfunkteilnehmer MS3, wobei Rufe innerhalb des virtuellen privaten Netzes VN als solche erkannt und preiswerter vergebührt werden als Rufe, die außerhalb des virtuellen privaten Netzes VN ausgelöst wurden.

Falls das Datenfeld VN-OPT nicht aktiv ist, wertet die Heimatdatei HLR das Datenfeld VNSRV aus, welches auf Dienste für den Teilnehmer MS3 innerhalb des privaten Netzes VN verweist. Dazu sind im Datenfeld VNSRV Zeigen (Pointer) eingetragen, die auf Dienste innerhalb der Diensteliste des logischen Datensatzes LDS-VN zeigen. Beispielsweise enthält das Datenfeld ein Flag-Bit, das angibt ob eine Rufumleitung mittels Auswertung des CFU Datenfeldes erfolgen soll.

Das obige Ausführungsbeispiel zur Beschreibung der Erfindung betrifft eine besonders vorteilhafte Anwendung. Die Erfindung ist jedoch nicht auf diese Anwendung beschränkt. Vielmehr sind zahlreiche Ausführungen der Erfindung denkbar, so etwa auch eine Anwendung in Mobilfunknetzen, die nach einem anderen Standard als den GSM-Standard ausgelegt sind. Hier ist z.B. das in den USA verbreitete Mobilfunknetz "AMPS-D" zu nennen, in dem ein zu dem genannten MAP-Protokoll vergleichbares Netzprotokoll "IS 41" verwendet wird

## Patentansprüche

1. Mobilfunknetz (MRN) mit mindestens einer Funkfeststation (BS), mit einer damit verbundenen Einrichtung (MSC), die einen Auf- und Abbau von Rufverbindungen zwischen Mobilfunkteilnehmern (MS1, MS2, MS3, MSX) steuert, die dem Versorgungsbereich der mindestens einen Funkfeststation (BS) zugeordnet sind, und mit einer mit der Einrichtung (MSC) verbundenen Datenbank (HLR),
**dadurch gekennzeichnet,** daß die Datenbank (HLR) für jeden dieser Mobilfunkteilnehmer (MS1, MS2, MS3, MSX) einen ersten Teilnehmerdatensatz (DS) enthält, dem ein erster logischer Datensatz (LDS) zugeordnet ist, um sie als Teilnehmer des Mobilfunknetzes zu registrieren, und daß dem Teilnehmerdatensatz (DS) für zumindest einige dieser Mobilfunkteilnehmer (MS1, MS2, MS3) jeweils ein zweiter logischer Datensatz (LDS-VN) zugeordnet ist um sie als Teilnehmer eines virtuellen privaten Netzes (VN) zu registrieren.

2. Mobilfunknetz (MRN) nach Anspruch 1, dadurch gekennzeichnet, daß die Datenbank (HLR) den zweiten logischen Datensatz (LDS-VN) so erstellt, daß sein struktureller Aufbau dem des ersten logischen Datensatzes (LDS) entspricht.

3. Mobilfunknetz (MRN) nach Anspruch 2, dadurch gekennzeichnet, daß der erste und zweite logische Datensatz (LDS, LDS-VN) jeweils eine Diensteliste (SSL) mit Dienstecodes (CFU, BOIC) enthalten, die Teilnehmerdienste angeben, und daß der zweite logische Datensatz (LDS-VN) einen von obigen Dienstecodes verschiedenen weiteren Dienstecode (VN-OPT) enthält, um diesen zweiten logischen Datensatz (LDS-VN) innerhalb des Teilnehmerdatensatzes (DS) zu aktivieren.

4. Mobilfunknetz (MRN) nach Anspruch 3, dadurch gekennzeichnet, daß dem weiteren Dienstecode (VN-OPT) eine Nummer (VNCHRN) zugeordnet ist, die Kennziffern (DIF, VNSRV, VNPX, EXT) enthält, zur Kennzeichnung von Leistungsmerkmalen (DIF, VNSRV) des virtuellen privaten Netzes (VN) und zur Identifizierung (VNPX, EXT) des Mobilfunkteilnehmers (MS3) als Teilnehmer dieses virtuellen privaten Netzes.

5. Mobilfunknetz (MRN) nach Anspruch 2, dadurch gekennzeichnet, daß die Datenbank (HLR) den strukturellen Aufbau des ersten und des zweiten logischen Datensatzes (LDS, LDS-VN) an ein im Mobilfunknetz verwendetes Übertragungsprotokoll (MAP) anpaßt.

6. Mobilfunknetz (MRN) nach Anspruch 1, dadurch gekennzeichnet, daß die Einrichtung eine Funkvermittlungsstelle (MSC) ist, und daß die Datenbank eine mit der Funkvermittlungsstelle verbundene Heimatdatei (HLR) ist, die die Mobilfunkteilnehmer sowohl als Teilnehmer des Mobilfunknetzes (MRN) als auch als Teilnehmer des virtuellen privaten Netzes (VN) verwaltet.

7. Mobilfunknetz nach Anspruch 1, dadurch gekennzeichnet, daß die Datenbank für Gruppen, die aus verschiedenen der Mobilfunkteilnehmer gebildet sind, entsprechende Gruppen von zweiten logischen Datensätzen enthält, um die Mobilfunkteilnehmer aus verschiedenen Gruppen als Teilnehmer von entsprechend verschiedenen virtuellen privaten Netzen zu registrieren.

8. Einrichtung, die innerhalb eines Mobilfunknetzes mit mindestens einer Funkfeststaion verbindbar ist und die einen Auf- und Abbau von Rufverbindungen zwischen Mobilfunkteilnehmern steuert, die dem Versorgungsbereich der mindestens einen Funkfeststation zugeordnet sind,
**gekennzeichnet durch** eine Datenbank die für jeden dieser Mobilfunkteilnehmer einen Teilnehmerdatensatz enthält, dem ein erster logischer Datensatz zugeordnet ist, um sie als Teilnehmer des Mobilfunknetzes zu registrieren, und dem für zumindest einige dieser Mobilfunkteilnehmer jeweils ein zweiter logischer Datensatz zugeordnet ist, um sie als Teilnehmer eines virtuellen privaten Netzes zu registrieren.

9. Datenbank (HLR), die innerhalb eines Mobilfunknetzes (MRN) mit einer Einrichtung (MSC) verbindbar ist, die mit mindestens einer Funkfeststaion (BS) verbunden ist und die einen Auf- und Abbau von Rufverbindungen zwischen Mobilfunkteilnehmern (MS1, MS2, MS3, MSX) steuert, die dem Versorgungsbereich der mindestens einen Funkfeststation (BS) zugeordnet sind,
**dadurch gekennzeichnet**, daß die Datenbank (HLR) für jeden dieser Mobilfunkteilnehmer (MS1, MS2, MS3, MSX) einen Teilnehmerdatensatz (DS) enthält, dem ein erster logischer Datensatz (LDS) zugeordnet ist, um sie als Teilnehmer des Mobilfunknetzes zu registrieren, und daß dem Teilnehmerdatensatz (DS) für zumindest einige dieser Mobilfunkteilnehmer (MS1, MS2, MS3) jeweils ein zweiter logischer Datensatz (LDS-VN) zugeordnet ist, um sie als Teilnehmer eines virtuellen privaten Netzes (VN) zu registrieren.
